Europäisches Patentamt

(19) European Patent Office

Office européen des brevets

(11) Publication number: 0 251 592
A2

(12) EUROPEAN PATENT APPLICATION

(21) Application number: 87305450.6

(22) Date of filing: 19.06.87

(51) Int. Cl.⁴: G01L 9/00 , G01L 23/18

(30) Priority: 23.06.86 GB 8615305

(43) Date of publication of application:
07.01.88 Bulletin 88/01

(84) Designated Contracting States:
AT BE CH DE ES FR GB IT LI NL SE

(71) Applicant: STC PLC
10, Maltravers Street
London, WC2R 3HA(GB)

(72) Inventor: Hodges, Robert James
141, Appleby Street Cheshunt
Hertfordshire EN7 6AU(GB)
Inventor: Adams, Graham Leonard
19, Homestead Paddock
London N14 4AN(GB)
Inventor: Crick, Aubrey Michael
50, Thornhill North Weald
Epping Essex CM16 6DW(GB)

(74) Representative: Dennis, Mark Charles et al
STC Patent Department Edinburgh Way
Harlow Essex CM20 2SH(GB)

(54) Pressure sensor.

(57) A high pressure sensor for a motor vehicle combustion chamber comprises a thick silicon chip (65) operating in bending mode, a flexible resilient closure member in the form of a bellows (63) and a thermally resistive push-rod (64) transferring force from the bellows to the chip.

EP 0 251 592 A2

## PRESSURE SENSOR

This invention relates to high pressure sensors particularly but not exclusively for monitoring cylinder pressure in automobile engines.

Ideas have been proposed for monitoring engine cylinder pressures, for example UK Patent Application 8512877 (unpublished at the date of filing), UK Patent Application No. 2168160A, and the very high pressures involved e.g. several hundred bar and the corrosive atmosphere, pose substantial problems to the provision of a cheap, effective device.

When making pressure measurements in for example automotive engine cylinders, it is necessary to protect the sensitive transducer, for example silicon transducer, from the high temperatures and corrosive gases which appear in the cylinder.

According to the present invention there is provided a high pressure sensor for sensing above atmospheric pressures in for example the combustion chamber of an internal combustion engine comprising a rigid housing a sensor chip within the housing, a flexible heat resistance closure member on one end of the housing, a force transfer member coupling between the closure and the sensor chip to provide force transfer from the closure member to the chip, said chip being responsive to provide an output signal representative of pressure applied externally of the closure member.

In order that the invention can be clearly understood reference will now be made to the accompanying drawings which show pressure sensors suitable for vehicle combustion chambers, and in which :-

Fig. I shows somewhat schematically a bending mode thick silicon pressure sensor according to an embodiment of the invention, with compressive strain acting on piezo-resistors;

Fig. 2 is a second embodiment similar to Fig. I but with strain acting in tension on piezo-resistors;

Fig. 3 shows another embodiment with a stiffened transducer;

Fig. 4 is a view of the underside of Fig. 3;

Fig. 5 is an embodiment with a compression mode transducer;

Fig. 6 shows the transducer chip of Fig. 5;

Fig. 7 is yet another embodiment of a bending mode pressure sensor with stiffened transducer.

Fig. 8 is a further embodiment of a bending mode pressure sensor with thick silicon chip transducer;

Fig. 9 shows an axial cross-section of a pressure sensor for sensing the pressure in a working cylinder of an internal combustion engine according to an embodiment of the invention;

Figs. 9A and 9C are details of Fig. 9, not on the same scale;

Fig. 9B is a transverse cross-section of Fig. 9 taken on the line X-X;

Figs. 10A, 10B and 10C are details of the embodiment of Fig. 9, not necessarily on the same scale;

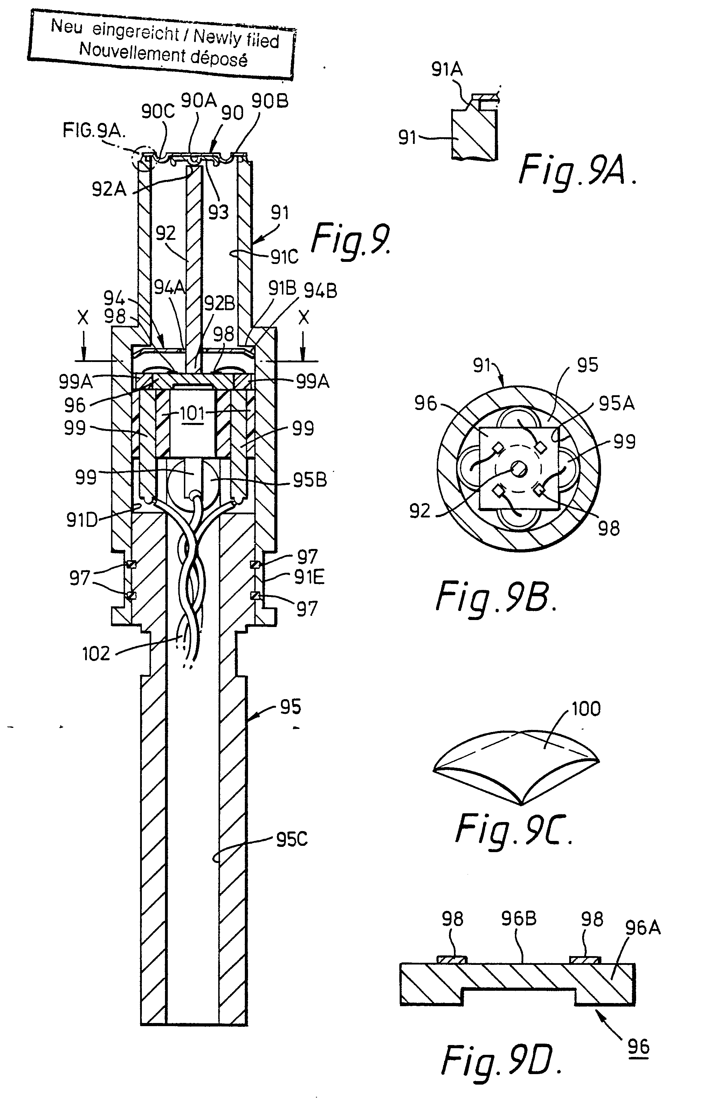

Fig. II shows a bridge circuit diagram for the connection of the strain gauge elements of the embodiment of Fig. 9.

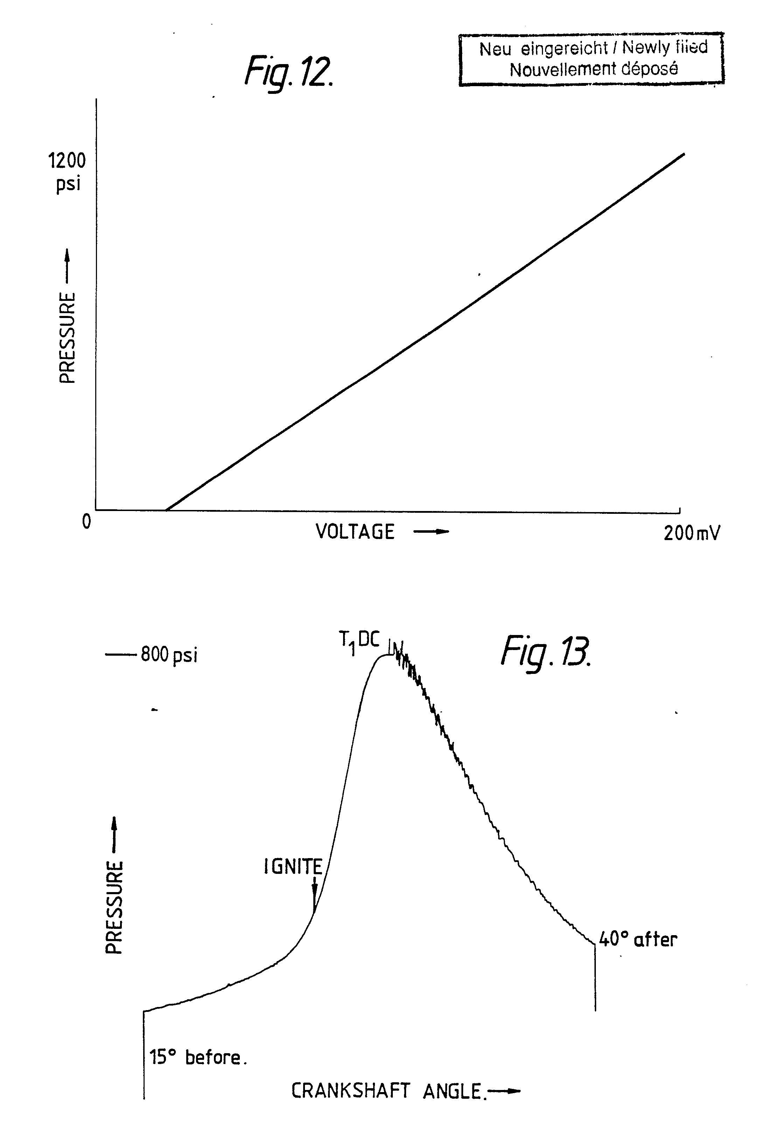

Fig. 12 is a pressure/voltage curve of the sensor of Figs. 9 to II,

Fig. 13 is a pressure/stroke curve of an i.c. engine as measured using the sensor of Figs. 9 to II, and

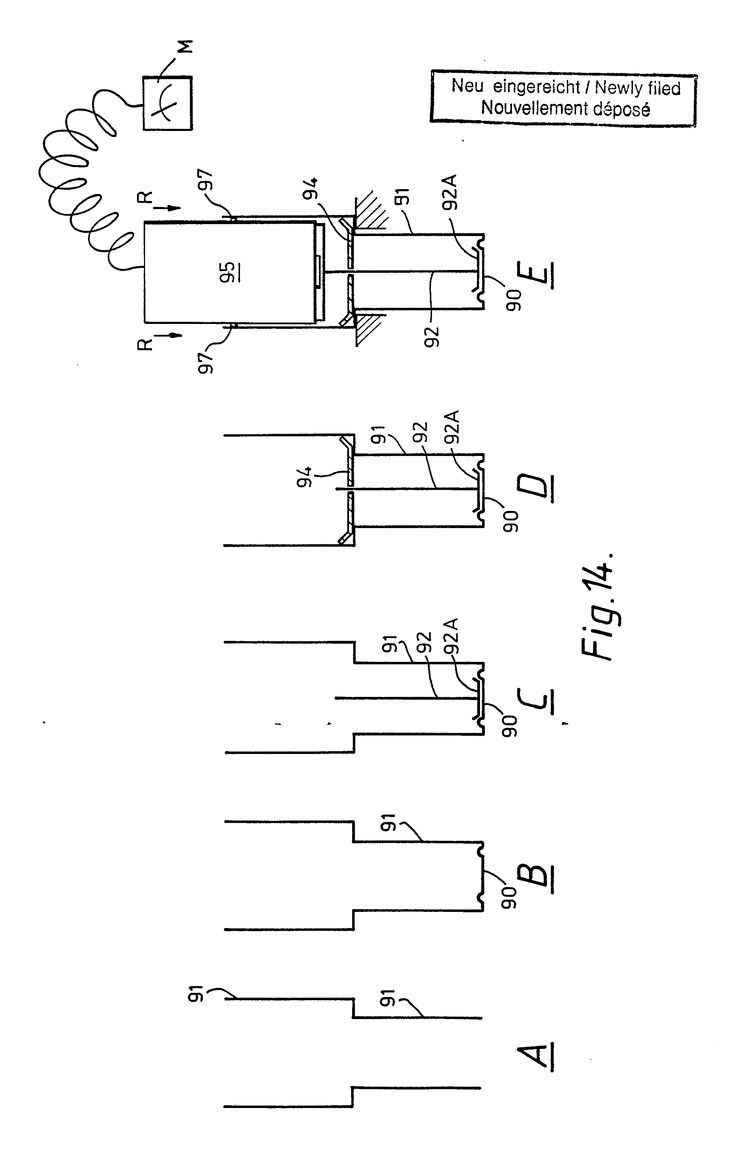

Fig. 14 shows the stages of manufacture of the embodiment of Figs. 9 to 13.

A simple method is depicted in Fig. I and relies on the use of a sealing diaphragm manufactured from a material selected to withstand both the corrosive effects of the gases and their high temperature and pressure. In the embodiments it is proposed to couple a very high stiffness silicon element, a so-called thick silicon element (this means a silicon element which has not been etched to make it thinner or etched to only a limited extent) to a very low stiffness or floppy sensing element, i.e. diaphragm or bellows. Mechanical tolerances in the system are absorbed in a predeflection of the diaphragm which, because of its low stiffness, introduces a negligible error due to static forces on the transducer.

As an equivalent to this system, it is proposed to take a low stiffness silicon element operating in a bending mode and to increase its apparent stiffness by adding a high stiffness component in parallel, so as to achieve an element of equivalent stiffness to the compressive silicon element discussed above.

Referring to Fig. I of the drawings there is shown schematically a pressure sensor comprising an isolating diaphragm I, made of for example a stainless steel alloy, which will shield the silicon transducer 2 from the corrosive high temperature gases. A thermal barrier 3 in the form of a push-rod couples the diaphragm I to a stiffening beam 4, which in turn is coupled to the silicon transducer 2. The transducer 2 has piezo resistors 5 and 6 on its surface so that when the silicon transducer is deflected downwardly as shown in the drawings, the piezo-resistors will be in compression. This transducer is thus termed a compressive mode transducer.

A casing 7, made of for example brass or stainless steel, has stepped shoulders 7a and 7b to support the transducer on the shoulder 7a and the stiffening beam on the shoulder 7b with the diaphragm I welded to the peripheral edge region 7c of the housing.

The combined stiffness of the beam 4 and the transducer 2 is designed to cause predeflection of the diaphragm so as to reduce the effects of mechanical tolerances.

Clearly the stiffening element could equally well be a diaphragm or any other convenient design which would generate sufficient stiffness. Essentially it must ensure that the load on the silicon transducer at the peak pressure to which the diaphragm is subjected, does not cause excessive stress on the silicon to cause the element to shatter.

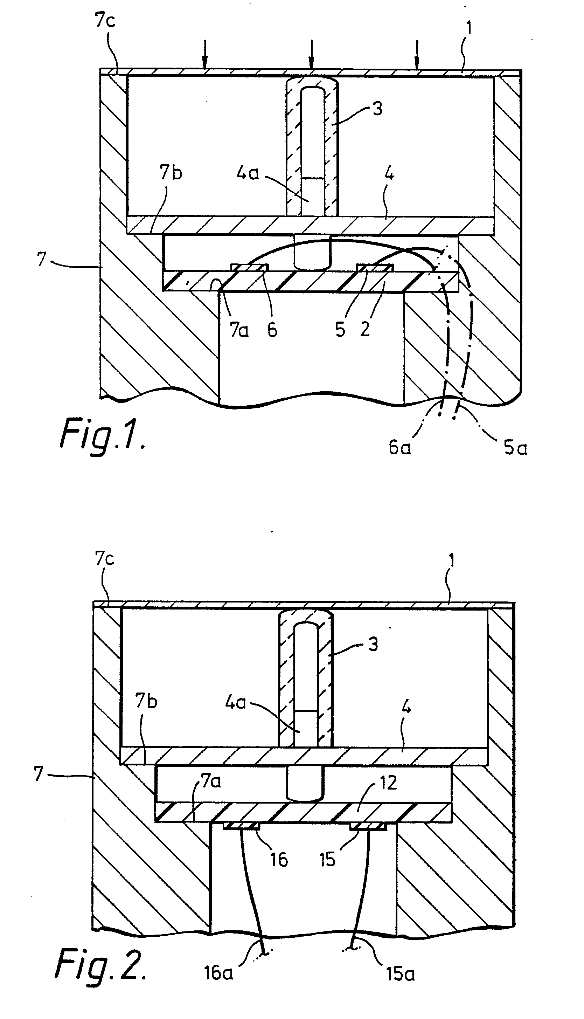

Referring now to Fig. 2 like reference numerals indicate like parts and the only significant difference between the transducer of Fig. I and the tranducer of Fig. 2 lies in the silicon transducer I2 which in this embodiment has piezo-resistors I5 and I6 on the underside so that when the transducer is deflected by the push-rod assembly 3 and 4a, these piezo-resistors will be in tension and so this silicon transducer is referred to as a tensile mode transducer.

Fig. I shows a system in which the piezo-resistors are subjected to a compressive stress. The embodiment of Fig. 2 has the piezo-resistors on the underside, which allows for easy connection (I5a and I6a).

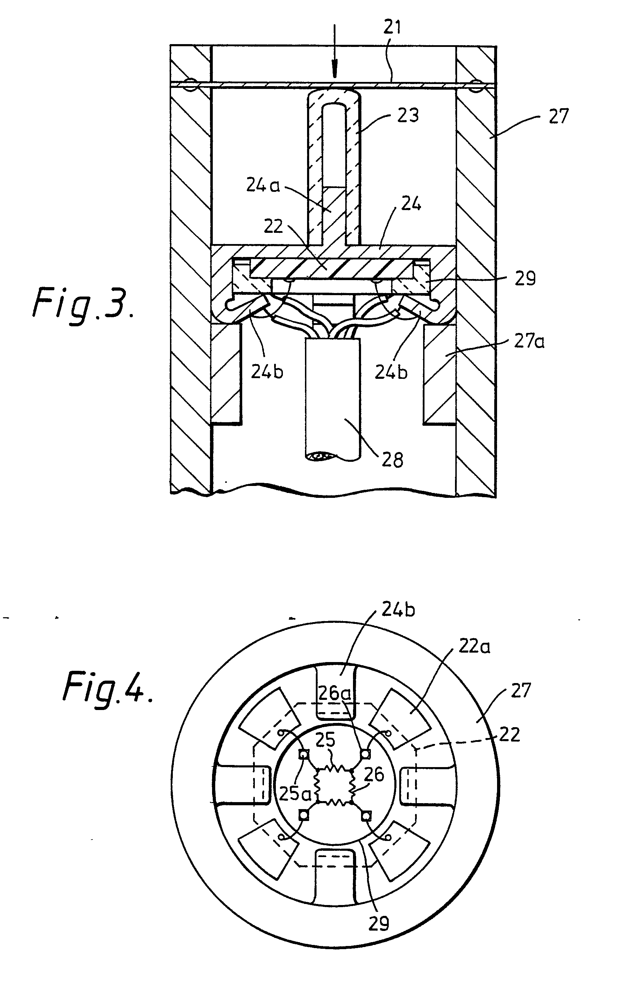

Referring now to Figs. 3 and 4, these show respectively a side cross-section and underside view of a pressure transducer based on the - schematic design of Fig. 2 of the drawings. The isolating diaphragm 2I is secured to housing 27 and engages on its underside a ceramic thermal barrier 23 secured to a spiggot 24a of a high stiffness element 24 made for example of metal such as stainless steel.

A tensile mode silicon transducer 22 is held against the underside of the high stiffness element 24 by means of an interposed ceramic ring 29 and bent-over lugs 24b which are compressed to provide a predeflection by means of a locking ring 27a which is screwed up the inside bore of the housing 27 to provide a predetermined predeflection of the diaphragm 2I by direct engagement against the lugs 24b.

The connections are conducted out of the sensor by a cable 28.

In the underside view the outline of the silicon transducer 22 is shown in broken line and the ceramic ring 29 has metallisation pads such as 22a to effect connection between the piezo-resistors such as 25 and 26 from connection pads 25a and 26a. The piezo-resistors such as 25 and 26 are four in number connected to four connection points on the transducer which in turn are wired to the metallisation pads 22a on the ceramic ring for onward connection to the cable 28.

For the sake of clarity the locking ring 27a has been omitted from the underside view in Fig. 4.

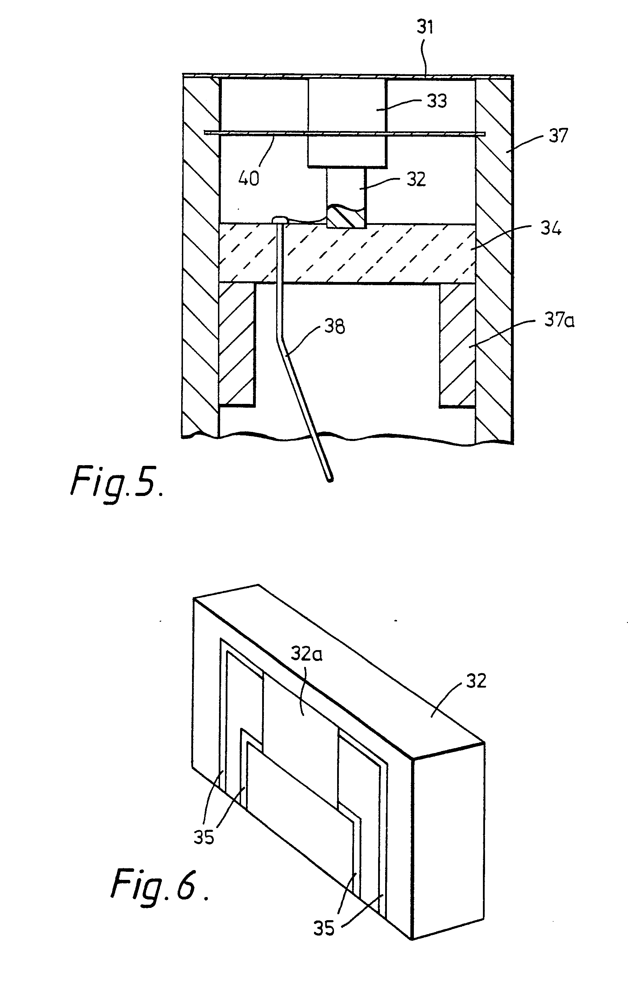

Fig. 5 shows a modified version of the compression mode sensor of Fig. I and comprises a low stiffness stainless steel disc 3I. This is welded to a tubular body 37 also made of stainless steel. The disc 3I is mechanically coupled to a silicon chip 32 which is supported on a ceramic base 34. A locking collar 37a is locked into the internal bore of the housing 37 by e.g. screw threading so that the disc 3I is in contact with a thermal barrier push-rod 33. The thermal barrier push-rod is made from high thermal resistance material and is divided into two parts by a thermal shunt 40 which is effective to sink heat from the mid point of the thermal push-rod barrier 33 to the sensor body 37, so that it is maintained at a temperature significantly less than the temperature within the combustion chamber of the engine and in this embodiment no greater than I40°C.

The silicon chip 32 is electrically connected to pins 38 secured in the ceramic base 34 via metallisation on both the silicon chip and the ceramic base.

Fig. 6 shows schematically the silicon chip as having a piezo-resistive element 32a with four connection tracks such as 35 which are connected by the metallisation to the pins 38. The silicon chip operates in the compression mode.

The silicon element used was 3mm long, Imm high by 0.44mm thick and had a theoretical stiffness of $I \times I0^6$ lbs. per inch. The disc deflection can also be translated into a pressure acting on the front surface of the disc. The disc stiffness to a point load of 0.I25" spherical radius acting on the underside is $23 \times I0^3$ lbs per inch, which is 2.3% of that of the silicon element.

In assemblying the compression mode sensor described in Figs. 5 and 6, firstly the stainless steel disc 3I is welded to the perimeter of the sensor body. The silicon chip is assembled onto the ceramic base 34. Then the thermal barrier 33 and the thermal shunt 40 are assembled into the sensor housing 37. The ceramic base is placed in the housing and the locking collar 37a is forced behind it using a hydraulic ram whilst the deflection of the front face of the stainless steel disc is monitored. The locking collar is forced further into the body until a predetermined deflection of the disc is obtained. For this embodiment a predeflection 1000th of 1" at the disc produces a load of 22.5 lbs. on the silicon element. This causes a deflection equal to 33% of the total safe deflection of the silicon chip to occur. The working pressure range of 80 bars or 1200psi occurs over the deflection range of the silicon element and approximates to 37% of the total deflection. The remaining 30% of the total travel is necessary in order to protect the silicon element in the event of over pressure up to say 150 bars or 2200psi.

A smaller error of less than 2% is caused by the reduction in predeflection of the stainless steel disc due the working pressure. Provided that the characteristics of the disc and the silicon element are reasonably linear, then the only effect of the error will be to reduce the output voltage change from the bridge, i.e. the Wheatstone bridge arrangement of the piezo-resistors, over the working pressure range by approximately 2%.

The predeflection is provided to take up the tolerances due to (a) positioning of the ceramic base in the body (b) expansion mismatch over the working temperature range, between the ceramic, silicon chip, thermal barrier assembly and the body.

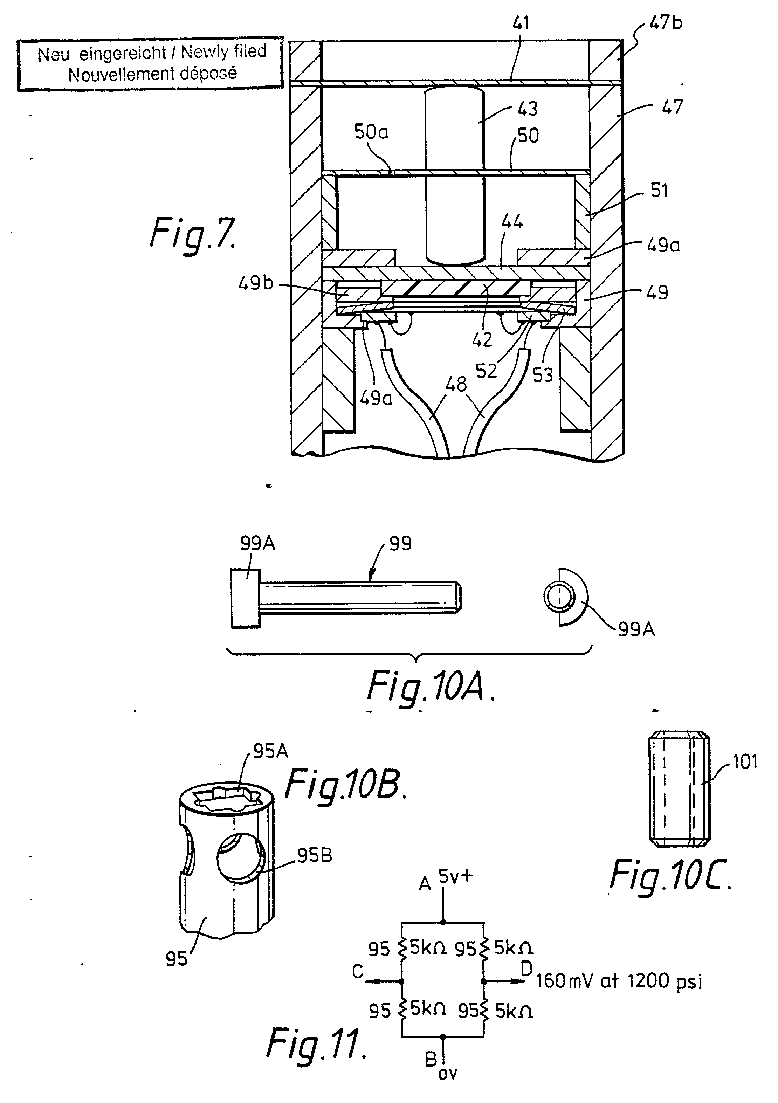

Referring to Fig. 7 a stainless steel disc 41 is welded to the perimeter of a stainless steel tubular housing 47. A thermal barrier push-rod 43 is carried by a thermal shunt 50 having a vent hole 50a and a silicon chip 42 operates in bending mode and carries piezo-resistive elements on its underside operating in tensile mode. The silicon chip 42 is secured against a stiffening disc 44. Ceramic rings 49 and 49a sandwich the stiffening disc 44 between them and these in turn are locked between spacer 51 which carries the thermal shunt 50 secured at one end and locking collar 47a which is screw-threaded in the internal bore of the body 47 to provide a predetermined predeflection of disc 41 by pushing the whole internal assembly up against the disc via the push-rod 43.

A printed circuit board 52 is held in a recess 49a in the silicon ring 49 and conductive tracks on the printed circuit board connect between the leadouts 48 and the piezo-resistors on the underside of the chip 42.

The disc 42 is clamped against the underside of the stiffening disc 44 by means of a bellville washer 53 which provides resilient spring pressure between the silicon disc 49 and an intermediate disc 49b which bears directly on the silicon chip.

The silicon chip is an unetched pressure transducer which when deflected with a point load applied to the surface of the silicon containing the strain gauges, produces a very linear characteristic up to a load of about 15 lbs. Thus the push-rod 43 provides virtually a point load. The ceramic disc 49b acts as a load spreading washer and has a square recess to accommodate the silicon chip 42.

As can be seen in the drawing the stainless steel disc 41 closes the housing and there is in addition a backing washer 47b and the disc 41 and the washer 47b are both simultaneously welded to the housing to ensure minimum distortion of the stainless steel disc during welding. Wire bonding between the annular printed circuit board 52 and the metallisations of the silicon chip is carried out through the bottom of the housing 47. As in the compressive mode sensor a stainless steel disc of low stiffness closes the end of the sensor housing and a thermal barrier and shunt serve to couple the disc to the capsule.

The locking collar 47a can alternatively be a press fit in the body and is forced to achieve a predetermined deflection at the front face of the stainless steel disc.

In this embodiment the stiffness of the silicon chip is calculated to be $11 \times 10^4$ lbs. per inch deflection and is lower than the compressive element of the previous embodiment. A stiffening element has therefore been introduced to increase the stiffness to $35 \times 10^4$. Due to the increased deflection of the silicon element in this mode, an error of 7.6% is caused by the reduction in predeflection of the stainless steel disc due to the working pressure. In this case the error can be almost entirely eliminated by reducing the stiffness of the stiffening disc 41.

The minimum useful deflection over the working pressure range of 1200psi is 37% of the total available deflection of the silicon element, and the loss deflection is the same as for the compressive element.

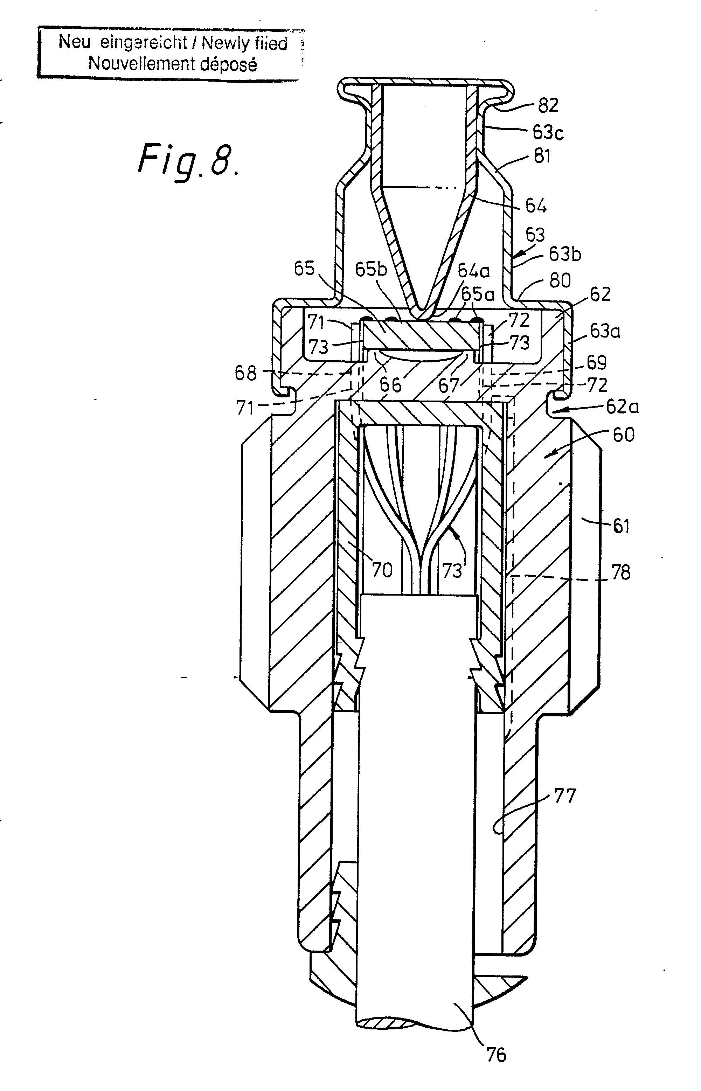

Fig. 8 shows a simplified embodiment of the invention. The sensor shown comprises a tubular body 60 of stainless steel threaded externally at 61. It has an annular front rim 62 onto which is secured a one-piece bellows or diaphragm 63 made of stainless steel. This bellows 63 has a rear wide portion 63a which fits over the rim 62 of the body 60 and is turned over at the back of the rim 62 into an annular recess 62a. The bellows has a cylindrical spacer portion 63b and a cylindrical waisted narrow portion 63c which has a cylindrical waist tightly embracing a push-rod 64 made of thermally insulating material or at least constructed so that it transfers minimal heat to the silicon chip 65. The rod 64 has a spherical tip 64a which makes effectively point contact with the chip 65.

The chip 65 operates in bending mode between support pedestals 66 and 67. Connections from the chip are brought through passageways 68, 69 in the body 60 and a tubular plastics locking member 70 has tubular extensions 71, 72 in the holes 68, 69 to provide insulating for the leadouts 73 from the metallic walls of the passageways 68, 69. Locking member 70 has serrations 74 and 75 to lock to the cable sheath 76 and to the inside bore 77 of the body.

A vent passageway 78 is formed by a narrow groove running along the inside bore 77 of the body 60 to vent the space within the bellows 63 to the atmosphere to prevent pressure build up within the bellows due e.g. to temperature changes.

The chip 65 which is a thick, unetched chip has connection pads 65a on its front surface 65b which connect with the strain gauge element diffused into the chip.

The compliance of the bellows 63, particularly the shoulder portions 80, 81 and 82 which provide axial movement in response to external pressure applied to the bellows, is carefully judged to meet the close tolerances required to achieve the correct amount of predeflection of the bellows set with the tip of the rod 64 pressed against the chip for the predeflection.

In assembling the sensor the chip is mounted on the pedestal, the cable with the locking member is inserted, and the bare cable leadouts 73 are connected to the pads 65a. The bellows is then positioned on the rim 62 together with the push-rod 64 and the rim of portion 63a turned over into the recess 62a.

The diffused strain gauge elements operate in tensile mode and are connected in Wheatstone bridge configuration.

An input is applied across one diagonal of the bridge (a.c. or d.c.) and the output across the other diagonal is sensed to measure the pressure as described earlier.

The embodiment described will have a measurement range of 0-1200psi, a frequency response of 5-8 KHz, an operative temperature range of -40°C to +120°C, a maximum flame temperature of 2500°C.

The silicon chips can have either a single piezo-resistive element or a full bridge (.i.e. four elements in bridge formation).

The high pressure sensor shown in Fig. 9 comprises a diaphragm 90 of stainless steel having a moveable central area 90A coupled to a fixed annular periphery 90B by a corrugated suspension region 90C, the diaphragm being made by a stamping and coining process. The peripheral portion 90B is welded to the rim 91A of a tubular body 91 having a step 91B between the smaller bore 91C and the larger bore 91D. The rim 91A and welding is more clear in Fig. 9A.

A stainless steel push-rod 92 has a load spreader 93 welded to one end 92A, and is fitted in the body 91 with the load spreader fitting in the recess defined on the underside of the diaphragm 90 by the corrugated region 90C. Towards its other end 92B the push-rod 92 is guided in the bore 94A of a guide 94 having an inclined annular fixing region 94B which bites into the wall of the bore 91C following force-fitting the guide 94 into the bore 91C from the direction of the larger bore 91D after the push-rod has been inserted.

A transducer mount 95 comprising a stainless steel tube is then force-fitted in the bore 91D of the body 91, and welded in position when the silicon strain gauge transducer 96 indicates a predetermined predeflection of the diaphragm 90 has been caused upon insertion of the transducer mount 95 as the push-rod end 92B bears against the transducer 96. The mount 95 is spot-welded at 97 through the thin wall portion 91E of the body 91.

The mount has a square recessed region 95A (Fig. 9B) in which the etched silicon strain gauge transducer 96 fits, having four implanted strain gauges 98 connected by leads each to a respective one of four leadout pins 99. The shape of each pin 99 is shown in Fig. 10A, is made of brass, and has a "D" shaped head 99A. The silicon transducer 96 is insulated from the mount 95 and the pins 99 by an insulating layer 100 which lies beneath the transducer and extends up the sides. The insulation 100 is shown perspectively in Fig. 9C.

Each pin 99 is held in a tubular ceramic insulator 101, shown in detail in Fig. 10C.

Fig. 10B shows in perspective view the top portion of the mount 95, without the transducer pins or insulators. It has four symmetrically-spaced-apart bores 95B which house the insulators 101 which in turn hold the stems of the pins 99. The flat side of the "D" shaped heads 99A is located against a respective edge of the transducer 96 via the insulating layer 100.

Output connection wires 102 extend through holes 95B from respective pins 99 along the bore 95C of the mount 95.

The strain gauge elements 98 would be connected in a bridge circuit as illustrated in Fig. 11, and a typical value for each element is Kohms. A 5 volt input across terminals A and B will produce d.c. output of about 160mV across terminals C and D at 1200psi and it is important to both that the output is d.c. which enables it to be incorporated in a variety of engine management systems and other high pressure sensing applications.

It is also important to note that the diameter of the top portion of body 91 is about 6mm while the lower portion of the body 91 is about 8.5mm, which although not shown, would be clamped in the head by a screw to enable the sensor to be inserted into a relatively small threaded hole in an engine cylinder head between existing overhead valve gear in existing engines.

Thus there is achieved a high output from a relatively tiny device which is convenient to manufacture and can be used in existing engines with little modification required.

The push-rod 92 is only 1mm in diameter so it is light yet strong enough to transfer the force from the diaphragm and acts as an effective heat transfer barrier. It is to be noted that the sensor effectively measures force.

The silicon transducer 96 has been etched underneath as can be seen in Fig. 9 so that the peripheral region 96A of the transducer supports the etched portion 96B. This is shown clearly in Fig. 9D which is a cross-section through the transducer, and the strain gauges 98 are located at the regions of maximum bending of the portion 96B where it joins the supporting peripheral region 96A. The degree of etching is very small. In this particular embodiment the chip has a thickness overall of 0.420mm. It is about 5mm in diameter and has an etched region about 2mm in diameter and a thickness of about 0.38mm. We have found that this small amount of etching is sufficient to ensure that bending takes place at the junction of 96B with 96A directly above the step at the edge of the etched retion and thus defines the location of maximum bending for the strain gauge element 98. Thus the silicon chip is still effectively a thick transducer and a flexible diaphragm, similar to those shown in the previous embodiments, with the closure member 90 having an integral portion i.e. 90C which forms the resilient element providing the preset predeflection of the closure member.

The slight etching of the transducer 96 provides the same effect as the separate support 66, 67 in Fig. II, but with the advantage that the etching is formed precisely in register with the implanted strain gauges and cannot later become misaligned. We have found that maintaining this precise register is critical in maintaining a highly sensitive device.

Fig. 12 is a graph of pressure versus voltage output from the bridge shown in Fig. II with 4.5V applied across terminal A and B. The zero offset is caused by the predeflection discussed earlier.

Fig. 13 shows the working stroke of one cylinder of an internal combustion engine running under load, as sensed by the sensor, commencing at 15° before TDC, ignition commencing at the beginning of the steeper portion, TDC occurring just before the peak and the fluctuations indicating knocking, the curve extending to about 40° after TDC. The pressure sensor not only picks up the knocking but can also be used to measure the area under the curve, so that the electronic processor can adjust the fuel supply and timing to minimise knock and maximise the area.

Fig. 14 shows the manufacturing stages of the embodiment of Figs. 9 to 13. The body 91 is provided (Fig. 14A). The closure member (diaphragm 90) is then welded to the body 91 (Fig. 14B). The body 91 is then held inverted in a jig at Fig. 14C and the push rod 92 with head 92A is inserted. Then the guide 94 is forced in (Fig. 14D). Finally the transducer mount 95 is forced in by a ram (arrows R) and the output of the piezo resistors monitored. When a predetermined output (e.g. 25 mV) is detected on meter M, this stops the ram and initiates welding at 97 and the predeflection of the diaphragm is thus fixed.

A force by a 1mm diarod on the transducer of 15lbs produces a deflection of the transducer of around one thousandth of an inch, giving an idea of the stiffness of the transducer.

## Claims

1. A high pressure sensor for sensing above atmospheric pressures in for example the combustion chamber of an internal combustion engine comprising a rigid housing, a sensor chip within the housing, a flexible heat resistance closure member on end end of the housing, a force transfer member coupling between the closure and the sensor chip to provide force transfer from the closure member to the chip, said chip being responsive to provide an output signal representative of pressure applied externally of the closure member.

2. A sensor as claimed in claim I, wherein the chip is arranged to operate in a bending mode and the chip has strain gauge resistors operating in tensile or compressive mode which provide said output signal.

3. A sensor as claimed in claim I, wherein the closure member is in the form of a bellows having a rear rim turned over behind an annular shoulder on the housing.

4. A sensor as claimed in claim I, comprising a resilient element which provides a preset predeflection of the closure member.

5. A sensor as claimed in claim 4, wherein the resilient element is formed by an integral portion of the closure member.

6. A sensor as claimed in claim 5, wherein the closure member comprises a disc-like diaphragm having an integral annular corrugation which provides the suspension of the diaphragm and also the resilient element to accomodate the predeflection of the closure member.

7. A sensor as claimed in claim 6, wherein the force transfer member comprises a rod with a disc-like member between the end of the rod and the diaphragm, which member supports the diaphragm over a major part thereof within said annular corrugation.

8. A sensor as claimed in claim I wherein the closure member has a relatively low stiffness in comparison with the sensor chip which has a relatively high stiffness.

9. A high pressure sensor comprising first and second housing parts fitted together, the first housing part supporting a flexible pressure sensing element and push rod assembly, the second part supporting a transducer, said transducer having a high stiffness in relation to the pressure sensing element, which has a low stiffness, the first and second parts being so joined together that the push rod transfers force between the sensng element and the transducer and determines a permanent elastic deflection of the sensing element.

I0. A method of making a pressure sensor comprising providing a first housing part supporting a pressure sensing element and push-rod assembly, providing a second housing part supporting a transducer, said transducer having a high stiffness in relation to the sensing element, which has a low stiffness, fitting the first and second housing parts together so that the push-rod transfers force from the sensing element to the transducer and determines a permanent elastic deflection of the sensing element.

*Fig.1.*

*Fig.2.*

0 251 592

*Fig.3.*

*Fig.4.*

Fig.5.

Fig.6.

*Fig.7.*

41
47b
43
50
50a
47
44
51
49a
49b
49
42
52
53
49a
48

*Fig.10A.*

99A
99
99A

*Fig.10B.*

95A
95B
95

101

*Fig.10C.*

*Fig.11.*

A 5v+
95 5kΩ    95 5kΩ
C
D 160 mV at 1200 psi
95 5kΩ    95 5kΩ
B
0v

*Fig.8.*

0 251 592

Neu eingereicht / Newly filed
Nouvellement déposé

Fig.9.

Fig.9A.

Fig.9B.

Fig.9C.

Fig.9D.

0 251 592

# Fig. 12.

1200 psi

PRESSURE →

0     VOLTAGE →     200 mV

# Fig. 13.

— 800 psi

$T_1DC$

IGNITE

PRESSURE →

40° after

15° before.

CRANKSHAFT ANGLE. →

Fig.14.

91

91

91

90

A

91

90

B

91
92
92A

90

C

94

91
92
92A

90

D

R          R
97          97
95

94

92                  91

92A

90

E

0 251 592